# EUROPEAN PATENT APPLICATION

(11) **EP 1 666 770 A1**
(43) Date of publication of application: **07.06.2006**
(21) Application number: 04772093.3
(22) Date of filing: 18.08.2004
(51) Int. Cl.: F16H 55/22, F16H 55/06, B62D 5/04, C21D 9/32

(54) **SPEED REDUCER, METHOD AND APPRATUS FOR MANUFACTURING THE SPEED REDUCER, AND ELECTRIC POWER STEERING DEVICE WITH THE SPEED REDUCER**

(30) Priority: 18.08.2003 JP 2003294438
(71) Applicant: NSK Ltd., Tokyo 141-8560 (JP); NSK Steering Systems Co., Ltd., Tokyo 141-8560 (JP)
(72) Inventor: KOYAMA, Takashi, c/o NSK STEERING SYSTEMS CO., LTD, Maebashi-shi, Gunma 3718528 (JP); KAWAMURA, Yuji, c/o NSK STEERING SYSTEMS CO., LTD, Maebashi-shi, Gunma 3718528 (JP); ENDO, Toshihito, c/o NSK STEERING SYSTEMS CO., LTD, Maebashi-shi, Gunma 3718528 (JP)
(74) Representative: Cross, James Peter Archibald
(86) International application number: PCT/JP2004/012132
(87) International publication number: WO 2005/017393

(57) **Abstract**

The present invention provides a speed reducer comprising a worm wheel having at least tooth skin surfaces made of polymer composite material and a worm engaged by the worm wheel and wherein a tooth surface of the worm is subjected to heat treatment by means of high frequency quenching.

## Description

### TECHNICAL FIELD

The present invention relates to an electric power steering apparatus used in a vehicle and more particularly, it relates to an improvement in a worm used in a speed reducing mechanism for transmitting a power of a motor.

### BACKGROUND ART

In vehicles such as motor vehicles, in order to reduce a manual steering force obtained by steering a steering wheel, an electric power steering apparatus for electrically providing an auxiliary steering force has been used. An electric motor is used in order to apply the electrical auxiliary steering force to a rack shaft. The steering force from the steering wheel aided by the electric motor via a speed reducing mechanism and is transmitted to the rack shaft whose both ends are connected to left and right vehicle wheels and which is shifted in an axial direction.

Further, in the electric power steering apparatus, as a speed reducing mechanism for transferring a power of the electric motor, generally, a worm and a worm wheel are used. Generally, although the worm wheel is formed from synthetic resin to reduce noise upon engagement, since output of the electric motor has been increased, the strength of the gear may be increased by mixing reinforcing fibers in the synthetic resin.

Since the reinforcing fibers in the worm wheel may attack the worm, it is necessary to increase hardness of at least tooth surfaces of the worm which are to be engaged by the worm wheel. To this end, in the past, the tooth surfaces were subjected to cementation quenching, nitriding treatment or metal plating. Examples thereof are disclosed in Japanese Patent Application Laid-open Nos. 2001-122135 and 2002-213576. Further, high frequency quenching is disclosed in the Japanese Patent No. 2779760.

However, the cementation quenching causes problems that deformation is increased after treatment and that a cementation quenching apparatus is balky and has a long working time.

In the nitriding treatment, the tooth surface becomes rough after the treatment and it is necessary to carry out finishing polishing after the treatment. Further, since the nitriding treatment is batch treatment, additional equipment may be balky and a working time may become long. Further, although small in comparison with the cementation quenching, deformation is also generated after the treatment.

Since accuracy required for worm teeth of the electric power steering apparatus is high, the metal plating causes a problem that, in the metal plating, it is necessary to control a plating thickness severely. Further, since the metal plating batch treatment, additional equipment may be balky and a working time may become long.

Further, since all of the above-mentioned cementation quenching, nitriding treatment and metal plating are not suited to in-line working, productivity cannot be enhanced.

### DISCLOSURE OF INVENTION

Thus, an object of the present invention is to provide a speed reducer and an electric power steering apparatus, which can perform in-line working, can reduce a working time, can use small treating equipment and can also perform polishing finishing after the treatment, while maintaining required hardness of a tooth surface.

To achieve the above object, the present invention provides a speed reducer comprising a worm wheel having at least tooth skin surfaces made of polymer composite material and a worm engaged by the worm wheel and wherein a tooth surface of the worm is subjected to heat treatment by means of high frequency quenching.

To achieve the above object, the present invention also provides a method for manufacturing a speed reducer comprising a worm wheel having at least tooth skin surfaces made of polymer composite material and a worm engaged by the worm wheel and wherein the worm is positioned vertically and tooth surfaces of the worm is subjected to heat treatment by means of high frequency quenching.

When the tooth surfaces of the worm is subjected to the high frequency quenching treatment, it is possible to perform in-line working in a machine working line same as a pre-processing and a post-processing and a working time is shortened. Further, the cost can be reduced. In addition, deformation after the hardening treatment, which is also caused in the cementation quenching and in the nitriding treatment, becomes smaller.

Further, when the high frequency contour quenching treatment is performed, since over-heat can be avoided and tooth tip melting and bending of a worm shaft can be reduced, a worm having higher accuracy can be obtained. Thus, the productivity can be further enhanced.

Further, if a previously tempered (quality-adjusted) material or non-tempered steel is used for the worm, since the tissue is stabilized and quenching hardness is stabilized at desired hardness, soft areas are eliminated, and an anti-wear property and endurance can be enhanced.

When the tooth surfaces of the worm is subjected to the high frequency quenching treatment, it is possible to perform in-line working in a machine working line same as a pre-processing and a post-processing and a working time is shortened. Further, the processing equipment can be made compact, and, after the high frequency quenching treatment, cutting treatment having less stock allowance can be performed.

In the normal high frequency quenching treatment, although the tooth tips are subjected to over-heat and the worm shaft is bent greatly, when the high frequency contour quenching treatment is carried out, the over-heat can be avoided, and the tooth tip melting and the bending of the worm shaft can be reduced.

Further, the previously tempered material or the non-tempered steel is used, the tissue is stabilized and the quenching hardness is also stabilized. The tempered material may include medium carbon steel (having carbon content of about 0.3 to 0.6%) which was quenched and then tempered, and the non-tempered steel is steel having properties same as those of conventional steels which was not subjected to quality-adjusting treatments such as quenching and tempering and may be steel in which a quenching ability is improved by adding B (boron) and a cool forging ability is improved by reducing alloy elements such as silicon and manganese.

Further, if a quenching output and/or a quenching time are adjusted, a worm having low cost and desired hardness can be manufactured merely by applying the high frequency quenching to a raw material. Since the quenching time is lengthened in comparison with the contour quenching, the carbon is diffused to reduce ferrite, so that an amount of residual ferrite in a quenching range of the worm becomes 0 to 10%.

Since the worm is manufactured while being positioned vertically, the worm shaft can be prevented from being bent by its own weight and uneven cooling can be avoided.

### BRIEF DESCRIPTION OF THE DRAWINGS

Fig. 1 is a (partial fragmental) front view showing a first embodiment of the present invention;
Fig. 2 is a sectional view of main parts of Fig. 1;
Fig. 3 is an axial partial sectional view of a worm subjected to a high frequency contour quenching treatment;
Fig. 4 is an axial partial sectional view of a worm subjected to a high frequency quenching treatment;
Fig. 5 is a sectional view showing an example in which a worm of drum type is used;
Fig. 6 is a sectional view showing an example in which worm of another drum type is used;
Figs. 7A to 7C are schematic views showing an apparatus for manufacturing a speed reducer of the present invention, where Fig. 7A is a top view, Fig. 7B is a front view and Fig. 7C is a side view; and
Fig. 8 is a perspective view showing a heating coil used in the manufacturing apparatus of Figs. 7A to 7C.

### BEST MODES FOR CARRYING OUT THE INVENTION

Now, embodiments of the present invention will be fully explained with reference to the accompanying drawings. Incidentally, in the drawings, the same elements or parts are designated by the same reference numerals. Further, it should be noted that embodiments which will be described later are merely examples and do not intend to limit the present invention in all senses.

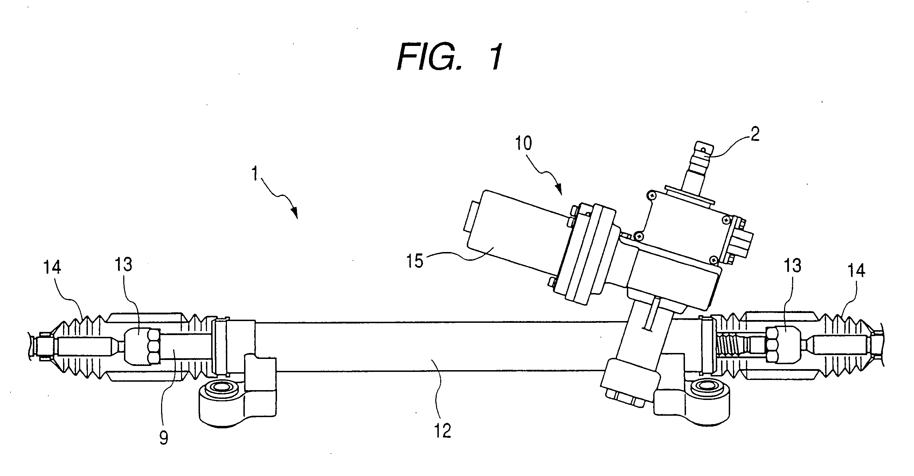

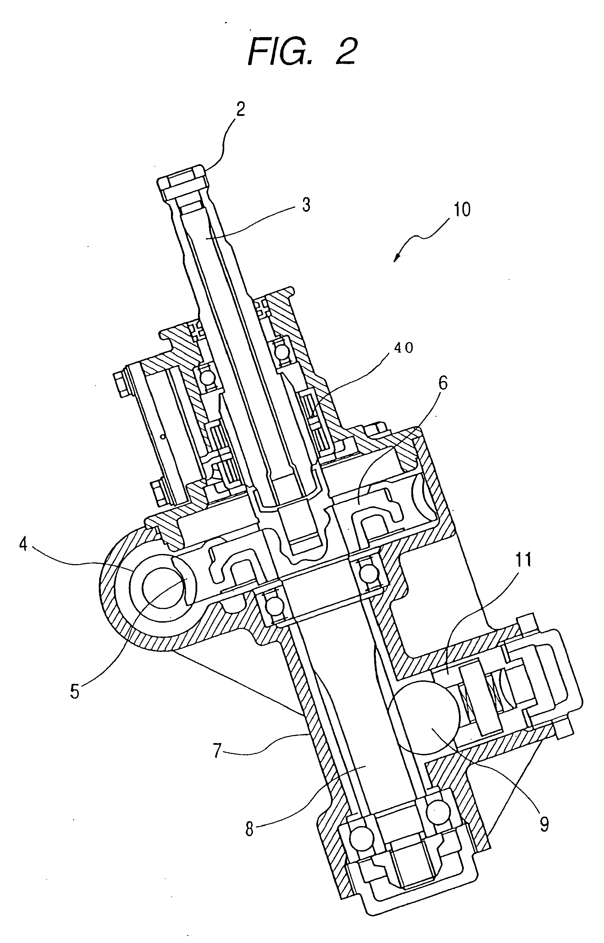

Fig. 1 is a (partial fragmental) front view of an electric power steering apparatus to which an embodiment of the present invention can be applied, and Fig. 2 is an axial sectional view of an auxiliary steering input portion. A general electric power steering apparatus of pinion assist type comprises an auxiliary steering input portion 10 and a cylindrical sleeve 12 into which a rack shaft 9 connected to the auxiliary steering input portion 10 is inserted.

Referring to Fig. 2, an input shaft 2 of the auxiliary steering input portion 10 is joined, via a universal joint, to a steering shaft (not shown) having an upper end to which a steering wheel (not shown) is secured. The input shaft 2 is connected to a pinion shaft 8 as an output shaft via a torsion bar 3. The input shaft 2 and the pinion shaft 8 are rotatably supported by a housing 7 via bearings. A pinion toothed portion formed on an outer periphery of the pinion shaft 8 is meshed with a rack toothed portion of the rack shaft 9. The rack shaft 9 is supported by a pressure pad 11 for movement in an axial direction.

A torque sensor 10 provided on the torsion bar 3 serves to detect a steering angle of a steering wheel operated by the driver, thereby providing power assist in accordance with a torque amount.

Both ends of the rack shaft 9 axially shiftably disposed within the cylindrical sleeve 12 extending in a left-and-right direction of the vehicle and secured to the vehicle are connected to steering vehicle wheels (not shown) via ball joints 13. The joints 13 are covered by respective boots 14.

With this arrangement, by steering the steering wheel (not shown), the pinion shaft 8 is rotated, with the result that a movement direction is changed by a rack/pinion mechanism, thereby shifting the rack shaft 9 in the axial left-and-right direction.

Here, an operation of the auxiliary steering input portion 10 will be described with reference to Fig. 2. When the input is applied to the input shaft 2 of the auxiliary steering input portion 10 from a steering shaft (not shown), a power is transmitted to the pinion shaft 8 as the output shaft via the torsion bar 3. A worm wheel metal core 6 made of metal and a worm wheel 5 made of resin are provided on an outer periphery of the pinion shaft 8, and the worm wheel 5 is meshed with a worm 4 secured to a rotary shaft of an electric motor 15.

The electric motor 15 is connected to a CPU (not shown) mounted to the vehicle. An output from the torque sensor 40 and information such as a vehicle speed are inputted to the CPU, and the CPU generates a predetermined signal which is in turn supplied to the electric motor 15, thereby generating proper torque. The electric motor 15 is controlled by the CPU on the basis of such information, with the result that the rotational speed of the motor is reduced via the worm 4 and the worm wheel 5, and the reduced speed is transmitted to the pinion shaft 8 as the output shaft. The steering force is assisted by such a mechanism. The worm 4 and the worm wheel 5 constitute a speed reducer.

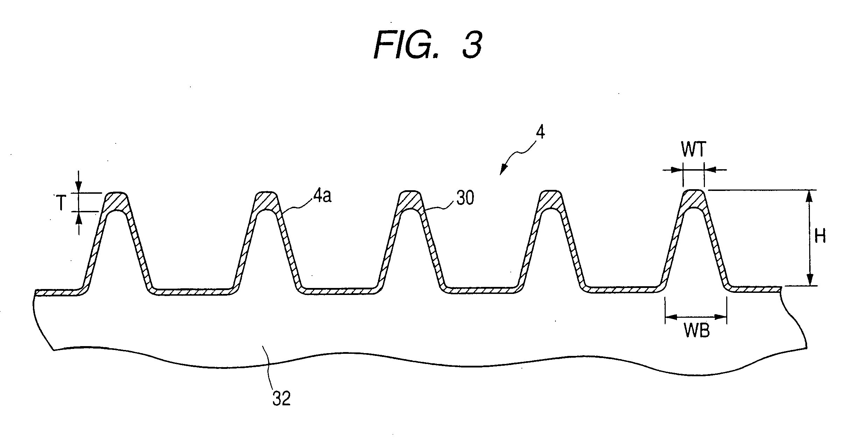

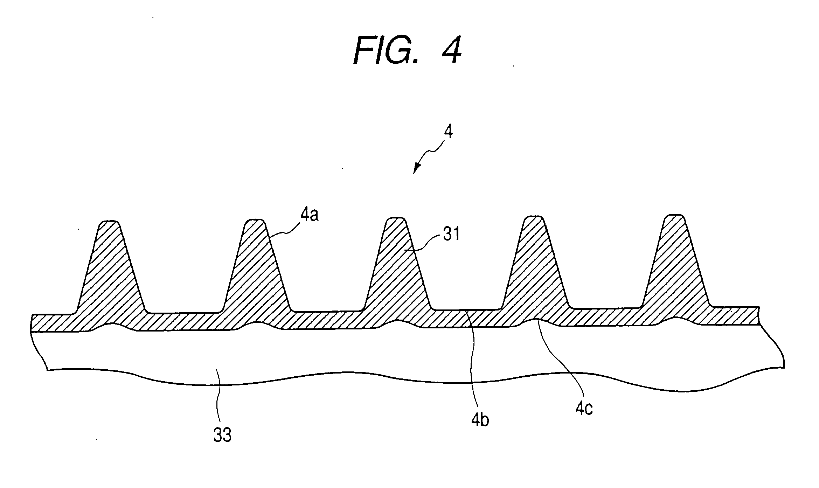

Next, heat treatment of the worm 4 will be fully explained with reference to Figs. 3 and 4. First of all, as material of the worm 4, although material obtained by quality-adjusting raw material of medium carbon steel such as S35C to S50C or not-tempered steel can be used, particularly, steel including boron is preferable. When the previously tempered material or the non-tempered steel is used for the worm, there are obtained advantages that the tissue is stabilized and that quenching hardness is stabilized.

The worm wheel 5 meshed with the worm 4 is a worm wheel made of polymer composite material. As reinforcing agent for the polymer composite material, for example, fibrous substance (glass fibers), particle reinforcing beads or its intermediate, or whisker (whisker crystal) can be used. However, in this case, since the reinforcing agent having higher hardness in the worm wheel 5 attacks the worm 4 to wear the latter, it is necessary that surface hardness of tooth surfaces of the worm 4 meshed with the worm wheel 5 be at least HrC 50 (Hv 513). Particularly, a range of hardness from HrC 50 to 63 is preferable. Further, it is preferable that the tooth surfaces are harder than the reinforcing agent included in the worm wheel 5 made of resin.

In order to harden an outer periphery of the worm including tooth tips 4a, the worm is subjected to heat treatment using high frequency quenching. Fig. 4 is an axial partial sectional view of a worm 4 having a quenched pattern, which was hardened by a normal high frequency quenching process. The quenching pattern can be obtained by cutting, polishing, nitric acid alcohol corrosion or the like. In general, since teeth of a worm for the electric power steering apparatus have thin thickness configurations, as shown, a quenched area 31 reaches a center of each tooth.

If the tooth tip is subjected to over-heat, tooth tip melting or bending of the shaft may be caused. In Fig. 4, when tempered steel is used as material, in case of martensite not-tempered steel, a non-quenched area 33 appears at an inner diameter side of the quenched area 31 as ferrite/martensite. In case of the tempered steel, the non-quenched area 33 is a range of sorbite, and, in case of the not-tempered steel, the non-quenched area is a range of ferrite/perlite. Incidentally, the non-quenched area 33 is positioned at the inner diameter side of tooth roots 4b along the axial direction.

Fig. 3 is an axial partial sectional view of a worm 4 having a quenched pattern, which is hardened a high frequency contour quenching process in which only a contour portion of the tooth is quenched by high frequency. As shown in Fig. 3, when the worm is subjected to the high frequency quenching, heating energy is generated along a surface skin and the heating energy is quickly applied or cut with high output, the over-heat of the tooth tips 4a of the worm 4 is greatly reduced and the tooth tip melting and the bending of the shaft are also reduced, thereby obtaining a good result. For the above reasons, as shown, a high frequency quenched area 30 has a substantially uniform depth from tooth sides to tooth roots, except apexes of the tooth tips 4a.

In Fig. 3, when tempered steel is used as material, in case of martensite not-tempered steel, a non-quenched area 32 appears at an inner diameter side of the quenched area 30 as ferrite/martensite. In case of the tempered steel, the non-quenched area 32 is a range of sorbite, and, in case of the not-tempered steel, the non-quenched area is a range of ferrite/perlite. Incidentally, the tempered steel means steel which was quenched and then was tempered and which has fine tissue and high toughness.

In the speed reducing worm 4 of the electric power steering apparatus 1, in order to maintain the strength of the matching worm wheel 5 made of resin, a tooth root width (tooth thickness) WB and a tooth tip width WT are smaller than a tooth height H. Further, as shown in Fig. 3, since a width of the apex of the tooth tip 4a of the worm 4 is small, the quenching depth is apt to be increased in comparison with other portions. Incidentally, various dimensions are obtained by measurement at a vertical section through the worm along a circumferential direction.

In the electric power steering apparatus, a relationship between the tooth height H and the tooth root width WB may be, for example, H/WB ≧1 and the tooth is characterized in that it has axially thin thickness as a whole.

Next, test conditions and its result of the high frequency contour quenching based on the present invention will be explained.

### 1. Materials

S45C (tempered material) and S25C (tempered material) were used.

### 2. Heat treatment conditions

### Equipment:

High frequency quenching apparatus of transistor type having output of 1000 Kw and frequency of 200 KHz Heating coil configuration:
Warehouse type coil

### Cooling water amount:

50 liters per minute (cooling from three directions)

The high frequency contour quenching shown in Fig. 3 was carried out with output of 400 Kw and a heating time of 0.34 s and the high frequency quenching shown in Fig. 4 was carried out with 200 Kw and a heating time of 1.3 s. The high frequency contour quenching can be controlled by considering the configuration of the used coil, by increasing the frequency, by increasing the output and/or by increasing a cooling speed.

The following Table 1 represents the test results carried out under the above-mentioned test conditions, according to the illustrated embodiment. A product obtained by the high frequency contour quenching of S45C raw material was found to provide a quenching pattern substantially resembling the tooth configuration as shown in Fig. 3 and desired surface hardness. Further, even in a product obtained by the normal high frequency quenching of S45C raw material, the surface hardness was satisfactory. A product obtained by the high frequency contour quenching of S25C raw material was found that it was almost not quenched.

**Table 1**

| | Surface hardness (0.1 mm from surface) | |
|---|---|---|
| | Tooth surface | Tooth root |
| ① | About 650 Hv | About 650 Hv |
| ② | About 700 Hv | About 650 Hv |
| ③ | About 350 Hv | About 450 Hv |

| | | |
|---|---|---|
| ①: S45C high frequency contour quenching | | |
| ②: S45C high frequency quenching | | |
| ③: S25C high frequency contour quenching | | |

In case of the high frequency contour quenching, it was found that, although there is residual ferrite and there is dispersion in hardness, the quenched tissue is satisfactory. Further, the appearance did not represent over-heat and was good. Furthermore, in case of the high frequency contour quenching, it was found that a deformed amount after the heat treatment is smaller in comparison with the high frequency quenching.

Regarding the quenching depths, in the Table 1, in case of ①, the quenching depth was about 0.4 mm at the tooth root, about 0.4 mm at the tooth slope portion and about 1.8 mm at the tooth tip end; and, in case of ②, the quenching depth was about 0.6 mm at the tooth root and about 4.3 mm from the tooth tip end; and, in case of (3), the quenching depth was about 0.1 mm at the tooth root, and the tooth slope portion and the tooth tip end were not quenched. Incidentally, the tooth height was 5.5 mm in common through ① to ③ .

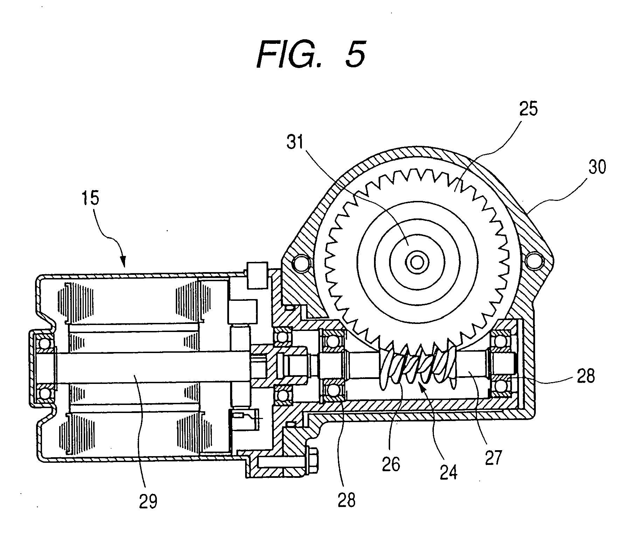

The present invention described above can be applied to a worm of drum type. Further, the present invention is more preferably applied to a worm having module smaller than 3. Fig. 5 is a sectional view showing an example in which a worm of drum type is used. A worm wheel 25 made of polymer composite material and fitted on an outer periphery of a pinion shaft 31 is disposed within a case 30 and the worm wheel 25 is meshed with a worm 24 of drum type.

Here, "module" used in this specification is for example, a "tooth perpendicular module" described in the document "KHK Synthetic Catalogue / Gear Techniques Data 3008; vol. 6" published by OBARA HAGURUMA INDUSTRIES Co. Ltd., and a tooth configuration of a cylindrical worm is JIS B1723.

The drum type worm 24 is formed on a worm shaft 27 supported by bearings 28 and has a toothed portion 26 having a largest diameter at both axial ends thereof and a smallest diameter at a center thereof. The worm shaft 27 is secured to a rotary shaft 29 of an electric motor 15. When the drum type worm is used, there is obtained an advantage that a loading ability has a margin, i.e. a large power can be transmitted. The reason is that, since all of teeth of the drum type worm 24 are meshed with the worm wheel 25 effectively, the number of teeth meshed is greatly increased thereby to reduce surface pressure on each engaged surface.

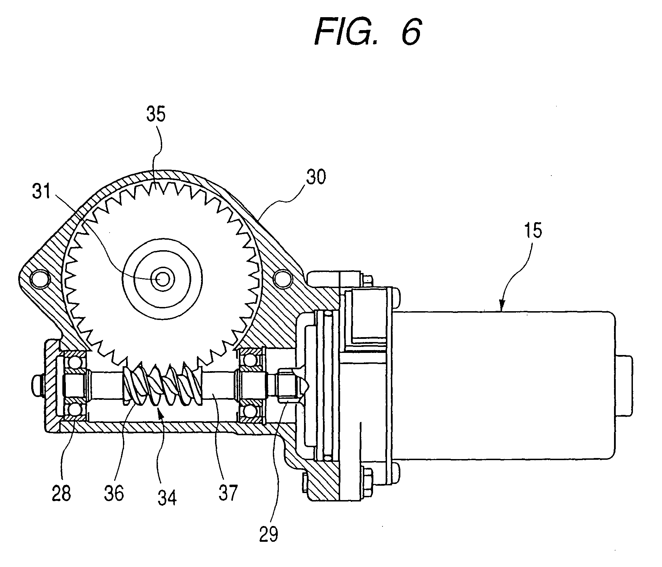

Fig. 6 is a sectional view showing an example in which another drum type worm is used. A worm wheel 35 made of polymer composite material and fitted on an outer periphery of a pinion shaft 31 is disposed within a case 30 and the worm wheel 35 is meshed with a worm 34 of drum type.

The worm 34 is formed on a worm shaft 37 supported by bearings 28, and outer diameters of teeth of the worm are equal to each other, but diameters of tooth roots have a largest diameter at both axial ends of the worm and a smallest diameter at a center of the worm. The worm shaft 37 is secured to a rotary shaft 29 of an electric motor 15. Here, different from normal worms, the diameter of the drum type worm 34 is smallest at the center of the worm. This corresponds to the large diameter of the worm wheel 35. An advantage of this worm is the same as that of the worm shown in Fig. 5; however, the worm shown in Fig. 6 can be manufactured more easily in comparison with the worm shown in Fig. 5.

Next, a method for manufacturing the speed reducer according to the present invention will be explained. Here, a speed reducer comprising a worm wheel in which at least tooth surface skin portion thereof is made of polymer composite material and a worm meshed with the worm wheel is manufactured. In this case, the worm is positioned vertically and tooth surfaces of the worm are subjected to heat treatment by means of high frequency quenching.

The reasons why the worm is positioned vertically are that the shaft of the worm is prevented from being bent by its own weight and that the uneven cooling is avoided.

When the worm is formed from tempered material or non-tempered steel, the worm is subjected to high frequency contour quenching with heating energy output of 550 to 600 Kw (600 Kw in this embodiment) for a heating time of 0.30 to 0.50 second (0.35 second in this embodiment). In this way, a worm (Fig. 3) having surface hardness of 550 Hv could be obtained.

However, in a case where the worm is formed from the not-tempered steel, since the desired hardness cannot be obtained under the above-mentioned conditions, in case of module of 2.65, the worm is subjected to the high frequency quenching with heating energy output of 250 to 300 Kw (300 Kw in this embodiment) for a heating time of 0.60 to 1.00 second (0.60 second in this embodiment). In general, the smaller the value of the module, the smaller the output and the shorter the heating time. To the contrary, the greater the value of the module, the greater the output and the longer the heating time. In this way, a worm (Fig. 4) having surface hardness greater than 550 Hv and not having a contour quenching pattern could be obtained. This is referred to as "non-contour quenching"; in this case, the non-quenched area 33 is positioned at the inner diameter side from the tooth roots 4b throughout the axial direction. As such, when the not-tempered steel is used, since great heating energy output is not required, smaller equipment can be used and, since the material is cheap, the manufacturing cost can be reduced. In both of the high frequency contour quenching and the high frequency quenching, it is designed that a value obtained by multiplying the output (Kw) by the time (second) becomes 150 to 300.

Now, fundamental characteristics of the worm manufactured by the above-mentioned manufacturing method using the material which is not previously tempered, i.e. raw material steel which is not-tempered steel, rather than the non-tempered steel will be explained by using numerical data.

### (1) Residual ferrite amount: 0 to 10%

(This is a numerical value representing a quenching range after the high frequency quenching/high frequency tempering and obtained by image analysis of a microscope photograph. This value is measured at a depth of 0.25 mm from the surface prior to polishing (corresponding to 0.20 mm from the surface after the polishing).)

### (2) Carbon amount of worm material: 0.42 to 0.48% (corresponding to S45C)

(This value is obtained by burning the raw material and then by measuring the product by means of an infrared ray absorbing method.)

### (3) Ferrite amount of worm material: 10 to 40%

(This value is obtained by image analysis of a microscope photograph of a core portion (out of quenching range) of the worm, after the heat treatment.)

### (4) Surface hardness of worm after high frequency quenching/high frequency tempering: 550 to 770 Hv

(This value is obtained by measurement by using a Vickers hardness-meter 5 Kg. This value is measured at a depth of 0.25 mm from the surface prior to the polishing (corresponding to 0.20 mm from the surface after the polishing).)

### (5) Core hardness (corresponding to material hardness) of worm: 22 to 28 HrC

### (This value is obtained by measurement by using Rockwell hardness-meter C scale)

Here, as shown in (1), the reason why the ferrite amount becomes a relatively low value as 0 to 10% is that, since the quenching time is lengthened in comparison with the contour quenching, the carbon is diffused to reduce the ferrite.

Further, as shown in (4), the reason why the hardness is set to 550 to 770 Hx is that, if the hardness is below 550 Hv, the worm is worn by glass fibers in the resin forming the tooth surfaces of the worm wheel and, by setting the hardness below 770 Hv, toughness can be obtained and crack can be prevented.

As explained above, without carrying out the high frequency contour quenching, by adjusting the quenching output and the quenching time, even when the raw material is subjected to the high frequency quenching, a worm having desired hardness can be manufactured with low cost.

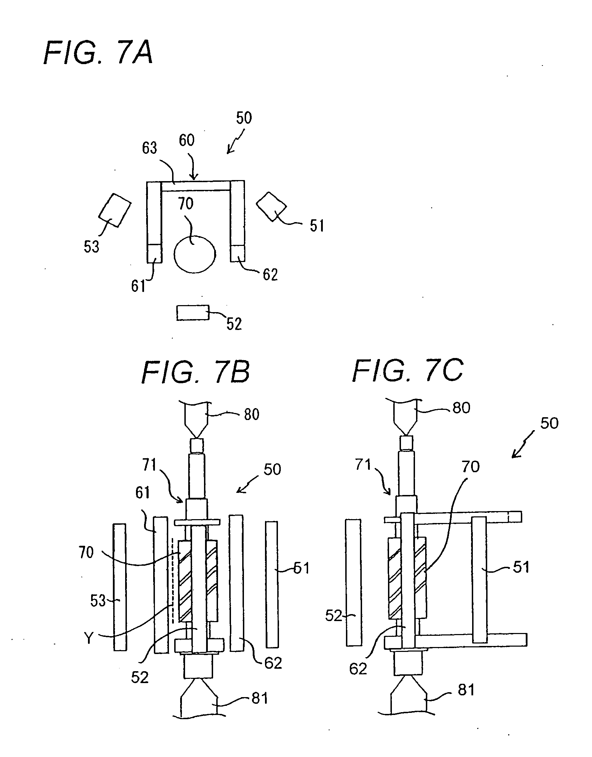

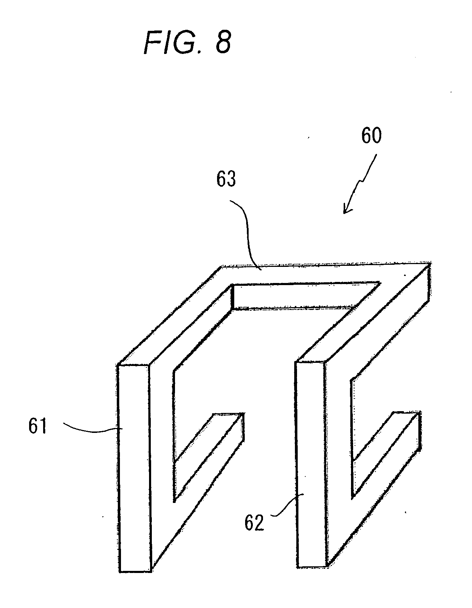

Next, a quenching apparatus used in the method for quenching the worm according to the present invention will be explained with reference to Figs. 7A to 7C and Fig. 8. Figs. 7A to 7C are schematic view showing the apparatus for manufacturing the speed reducer of the present invention, where Fig. 7A is a top view, Fig. 7B is a front view and Fig. 7C is a side view. Further, Fig. 8 is a perspective view showing a configuration of a heating coil used in the manufacturing apparatus of Figs. 7A to 7C.

As shown in Figs. 7A to 7C, in a quenching apparatus 50, a work 71 to which a worm 70 is secured is supported by centers 80 and 81 in a vertical direction. The work 71 and the worm 71 are installed in parallel in the vertical direction and thus positioned vertically.

A heating coil 60 is disposed to partially enclose the worm 70 in a circumferential direction. The heating coil 70 is a coil of warehouse type as shown in Fig. 8 and comprises vertical portions 61 and 62 and a connection portion 63 to form an inverted U shape.

Further, three cooling jackets 51, 52 and 53 are disposed around the heating coil 60 at a predetermined interval. As shown in Figs. 7B and 7C, although axial lengths of the cooling jackets 51 to 53 are the substantially the same as axial lengths of the vertical portions 61 and 62 of the heating coil, it is not necessary that these lengths are the same. For example, the vertical portions 61 and 62 of the heating coil 60 may have the axial lengths at least longer than a quenching range Y for the worm shown in Fig. 7B.

In the quenching apparatus 50 having the above-mentioned construction, the work 71 and the work 70 are subjected to a quenching treatment while being rotated at predetermined revolutions per minute by means of a driving apparatus (not shown).

## Claims

1. A speed reducer comprising a worm wheel having at least tooth skin surfaces made of polymer composite material and a worm engaged by said worm wheel,
wherein:
a tooth surface of said worm is subjected to heat treatment using high frequency quenching.

2. A speed reducer according to claim 1, wherein the high frequency quenching is contour quenching.

3. A speed reducer according to claim 1 or 2, wherein said worm is formed from tempered material or non-tempered steel.

4. A speed reducer according to any one of claims 1 to 3, wherein surface hardness of said worm is 550 to 770 Hv.

5. A speed reducer according to any one of claims 1 to 4, wherein a residual ferrite amount in a quenching range of said worm is 0 to 10%.

6. A speed reducer according to any one of claims 1 to 5, wherein said worm is a worm of drum type.

7. A speed reducer according to any one of claims 1 to 6, wherein module of said worm is 3 or less.

8. An electric power steering apparatus comprising a speed reducer according to any one of claims 1 to 7.

9. A speed reducer according to claim 1, wherein said worm is formed from not-tempered steel.

10. A speed reducer according to claim 9, wherein the high frequency quenching is non-contour quenching.

11. A speed reducer according to claim 9 or 10, wherein surface hardness of said worm is 550 to 770 Hv.

12. A speed reducer according to any one of claims 9 to 11, wherein a residual ferrite amount in a quenching range of said worm is 0 to 10%.

13. A speed reducer according to any one of claims 9 to 12, wherein said worm is a worm of drum type.

14. A speed reducer according to any one of claims 9 to 13, wherein module of said worm is 3 or less.

15. An electric power steering apparatus comprising a speed reducer according to any one of claims 9 to 14.

16. A method for manufacturing a speed reducer comprising a worm wheel having at least tooth skin surfaces made of polymer composite material and a worm engaged by said worm wheel, wherein:
said worm is positioned vertically and a tooth surface of said worm is subjected to heat treatment by means of high frequency quenching.

17. A method for manufacturing a speed reducer according to claim 16, wherein said worm is formed from tempered material or non-tempered steel and is subjected to high frequency contour quenching with output of about 550 to 600 Kw for a time of about 0.30 to 0.50 second.

18. A method for manufacturing a speed reducer according to claim 16, wherein said worm is formed from not-tempered steel and is subjected to high frequency quenching or high frequency contour quenching with output of about 250 to 300 Kw for a time of about 0.60 to 1.00 second.

19. An electric power steering apparatus comprising a speed reducer manufactured by a manufacturing method according to any one of claims 16 to 18.

20. An apparatus for manufacturing a speed reducer comprising a worm wheel having at least tooth skin surfaces made of polymer composite material and a worm engaged by said worm wheel, comprising:
a center for supporting said worm in a vertical direction;
a heating coil for encircling said worm; and
a cooling jacket for encircling said worm; and wherein
in a condition that said worm is positioned vertically, while rotating said worm, a tooth surface of said worm is subjected to heat treatment by means of high frequency quenching.
